# EUROPEAN PATENT APPLICATION

(11) **EP 4 456 185 A1**
(43) Date of publication of application: **30.10.2024**
(21) Application number: 22911721.3
(22) Date of filing: 09.12.2022
(51) Int. Cl.: H01M 4/36, H01M 4/38, H01M 4/48, H01M 4/62, H01M 10/052, H01M 4/02

(54) **ANODE ACTIVE MATERIAL FOR SECONDARY BATTERY AND METHOD FOR MANUFACTURING SAME**

(30) Priority: 22.12.2021 KR 20210185219
(71) Applicant: OCI Company Ltd., Seoul 04532 (KR)
(72) Inventor: OH, Minkyung, Seongnam-si, Gyeonggi-do 13212 (KR); NOH, Minho, Seongnam-si, Gyeonggi-do 13212 (KR); CHANG, Joonhyun, Seongnam-si ,Gyeonggi-do 13212 (KR); CHI, Eunok, Seongnam-si, Gyeonggi-do 13212 (KR)
(74) Representative: HGF
(86) International application number: PCT/KR2022/020067
(87) International publication number: WO 2023/121088

(57) **Abstract**

According to a method for manufacturing an anode active material for a secondary battery of the present invention, in manufacturing an anode active material for a secondary battery, having: i) a structure in which a pitch coating layer is formed on a composite material comprising nano silicon and amorphous carbon; or ii) a structure of a graphite core and a nano silicon-pitch shell surrounding the core, a pitch coating layer is formed by using two types of solvent, thereby improving uniformity and density of the pitch coating layer. In addition, an anode material for a secondary battery, comprising the anode active material for a secondary battery of the present invention, can improve initial discharge capacity, initial coulombic efficiency, and cycle life characteristics of a secondary battery.

## Description

### FIELD

The present disclosure relates to an anode active material for a secondary battery that may improve initial discharge capacity (IDC), initial coulombic efficiency (ICE), and cycle life characteristics of the secondary battery, and a method for preparing the same.

### DESCRIPTION OF RELATED ART

Recently, with the rapid spread of electronic devices that use batteries, such as mobile devices and electric vehicles, the demand for secondary batteries that are small, and lightweight, and have relatively high capacity is increasing. This trend is accelerating further.

Graphite as a representative material widely used as an anode material for secondary batteries, has the advantages of excellent electrochemical performance and low cost. However, as charge/discharge cycles are repeated, charge/discharge efficiency and charge capacity thereof rapidly decrease, thus making it difficult to meet the demands of electronic devices requiring high capacity.

In one example, inorganic materials such as silicon (Si), germanium (Ge), and antimony (Sb) have high theoretical capacity, and in particular, silicon has the advantage of having a low potential difference from that of lithium ions. However, in the charge/discharge cycle, the volume expansion of silicon occurs, thereby causing structural damage and short cycle life of the secondary battery.

To overcome the above limitations, a composite material including a carbon material and silicon has recently been used as an active material for an anode material. However, there have been difficulties in stably binding silicon and the carbon material to each other.

Accordingly, approaches such as coating a pitch as the carbon material on nano-silicon (nano-Si) particles mixed with a conductive material or coating a mixture of the nano-silicon and the pitch on a surface of graphite have been developed.

A typical conventional coating method that may be used to form a pitch coating layer or a coating layer including pitch and nano-silicon typically includes a dry method using a solvent and a wet method using a single solvent.

First, the dry method includes pulverizing the pitch to a size of submicron or smaller, and then coating the pulverized pitch in a rubbing scheme using the energy generated by physical friction. However, due to the nature of the pitch, it is difficult to pulverize the pitch to a submicron size, and the structure of silicon is easily damaged during the process of applying the physical friction. Furthermore, since the pitch has physical properties that the pitch easily agglomerates, there is also a problem in that uncoated and agglomerated pitch particles remain in the coating layer, thereby deteriorating the coating properties and the quality of the prepared anode material.

Next, the wet method includes dissolving the pitch in a solvent to produce a solution, mixing the solution with a coating target material, and then forming a pitch coating layer via a condensation process that vaporizes the solvent under a vacuum heating condition. However, in the wet method, when an amount of the solvent becomes insufficient during the condensation process, coating uniformity may deteriorate, which may lower the quality of the prepared anode material. Further, more dense coating cannot be obtained.

Therefore, it is necessary to develop a method for preparing a high-quality anode active material for a secondary battery that may solve the above problems and improve the initial discharge capacity, initial coulombic efficiency, and cycle life characteristics of the secondary battery.

### DISCLOSURE

### TECHNICAL PURPOSE

The present disclosure is intended to solve the above problem. Thus, a purpose of the present disclosure is to provide a method for preparing an anode active material for a secondary battery in which when the anode active material for the secondary battery is a composite material having a coating layer including the pitch, two types of solvents are used when forming the pitch coating layer, thereby improve uniformity and density of the pitch coating layer.

Furthermore, the present disclosure provides an anode material including an anode active material for the secondary battery so as to improve the initial discharge capacity, initial coulombic efficiency, and cycle life characteristics of the secondary battery, and a secondary battery including the same.

The purposes of the present disclosure are not limited to the purposes mentioned above, and other purposes and advantages of the present disclosure as not mentioned may be understood based on descriptions as set forth below, and will be more clearly understood based on embodiments of the present disclosure. Furthermore, it will be readily apparent that the purposes and advantages of the present disclosure may be realized by solutions and combinations thereof indicated in the claims.

### TECHNICAL SOLUTION

According to one aspect of the present disclosure to achieve the above purpose, a method for preparing an anode active material for a secondary battery may be provided, the method comprising:
(a) mixing nano-silicon, a carbon-based conductive material, and a resin matrix to prepare mixture powders;
(b) dissolving high softening point pitch in a first solvent to prepare a pitch solution;
(c) adding and stirring the mixture powders to the pitch solution to prepare a dispersion solution including the nano-silicon, the carbon-based conductive material, and the pitch;
(d) adding a second solvent to the dispersion solution to precipitate the pitch on a composite containing the nano-silicon and the carbon-based conductive material to form a pitch coating layer;
(e) removing the first solvent and the second solvent to obtain dry powders; and
(f) carbonizing the dry powders to obtain an anode active material having a structure in which the pitch coating layer is formed on the composite containing the nano-silicon and amorphous carbon, wherein the high softening point pitch is soluble in the first solvent, wherein the high softening point pitch is insoluble in the second solvent, wherein the first solvent and the second solvent are miscible with each other.

According to another aspect of the present disclosure to achieve the above purpose, a method for preparing an anode active material for a secondary battery may be provided, the method comprising:
(a') dissolving high softening point pitch in a first solvent to prepare a pitch solution, and adding graphite to the pitch solution to prepare a graphite-pitch solution;
(b') dispersing nano-silicon in a second solvent to prepare a nano-silicon dispersion solution, wherein (b') is separate from (a');
(c') adding the nano-silicon dispersion solution to the graphite-pitch solution to prepare a mixed solution of the graphite, the pitch, and the nano-silicon;
(d') further adding the second solvent to the mixed solution of the graphite, the pitch, and the nano-silicon such that a mixture of the nano-silicon and the pitch is precipitated on the graphite, thereby forming a coating layer including the nano-silicon and the pitch;
(e') removing the first solvent and the second solvent to obtain dry powders;
(f) dry-pulverizing the dry powders: and
(g') carbonizing the pulverized dry powders to obtain an anode active material for a secondary battery having a structure in which a nano-silicon-pitch shell surrounds a graphite core, wherein the high softening point pitch is soluble in the first solvent, wherein the high softening point pitch is insoluble in the second solvent, wherein the first solvent and the second solvent are miscible with each other.

According to still another aspect of the present disclosure to achieve the above purpose, there may be provided an anode material for a secondary battery, the anode material including the anode active material for the secondary battery prepared according to the preparing method as described above, and a secondary battery comprising the anode active material for the secondary battery prepared according to the preparing method.

### TECHNICAL EFFECT

According to the method for preparing the anode active material for secondary battery in accordance with the present disclosure, the pitch coating layer using may be formed using the two types of solvents, such that the uniformity and density of the pitch coating layer are improved.

More specifically, according to the method for preparing the anode active material for a secondary battery in accordance with the present disclosure,
in preparing the anode active material for a secondary battery having:
   i) A structure in which a pitch coating layer is formed on a composite including nano-silicon and amorphous carbon; or ii) structure of a graphite core and a nano silicon/pitch shell surrounding the core,
two types of solvents may be used such that the coating uniformity and density of the pitch coating layer may be improved.

The anode material for the secondary battery including the anode active material for the secondary battery in accordance with the present disclosure may improve the initial discharge capacity, initial coulombic efficiency, and cycle life characteristics of the secondary battery.

In addition to the above-mentioned effects, the specific effects of the present disclosure are described below along with the descriptions of the specific details for carrying out the present disclosure.

### BRIEF DESCRIPTION OF DRAWINGS

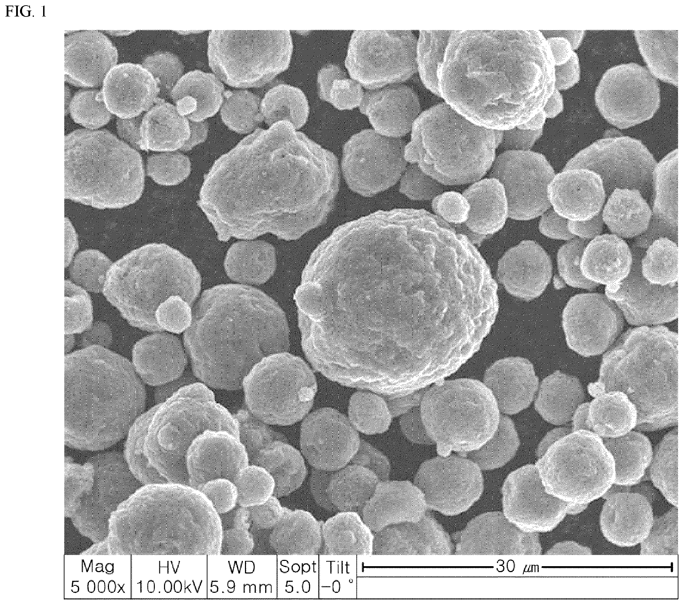

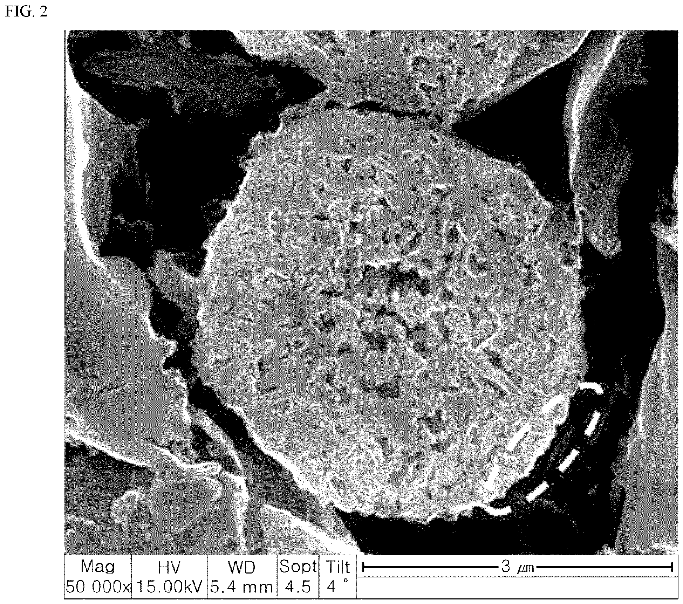

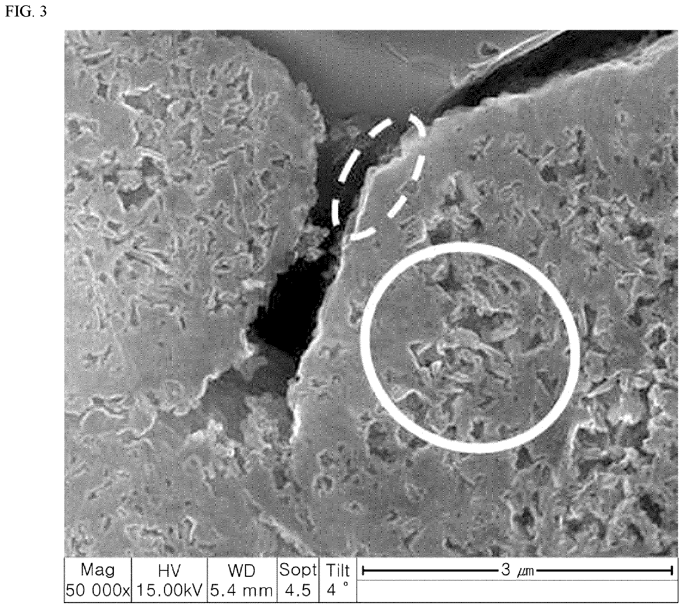

FIG. 1 to FIG. 3 are photographs of a nano-silicon-amorphous carbon-pitch composite structure as an anode active material as prepared in Present Example 1 of the present disclosure. Specifically, FIG. 1 is a SEM image of a surface of the composite structure at 5,000 magnification, and FIGS. 2 and 3 are cross-sectional SEM images of the composite structure at 50,000 magnification.

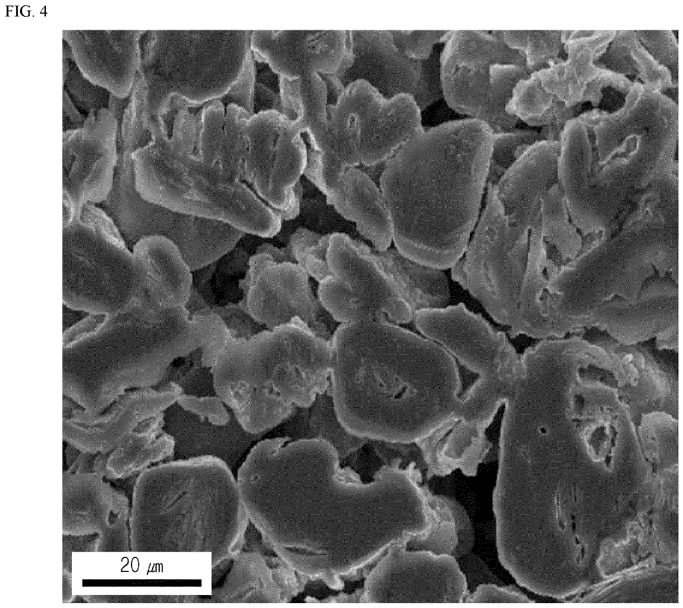

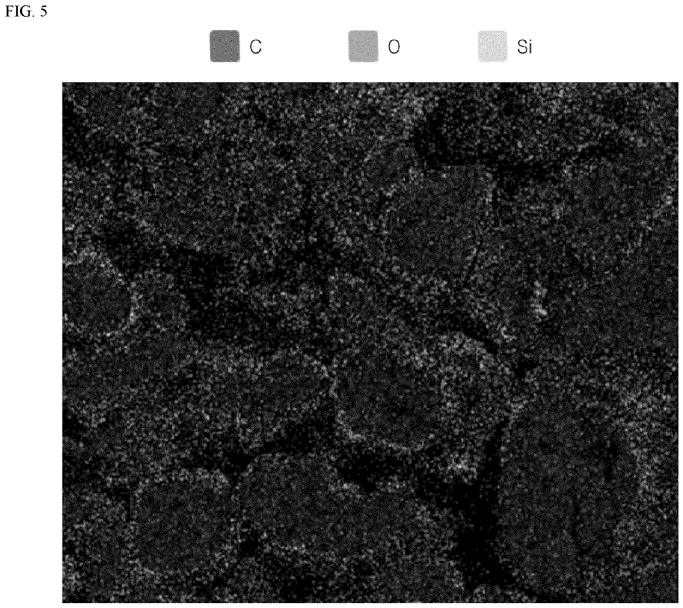

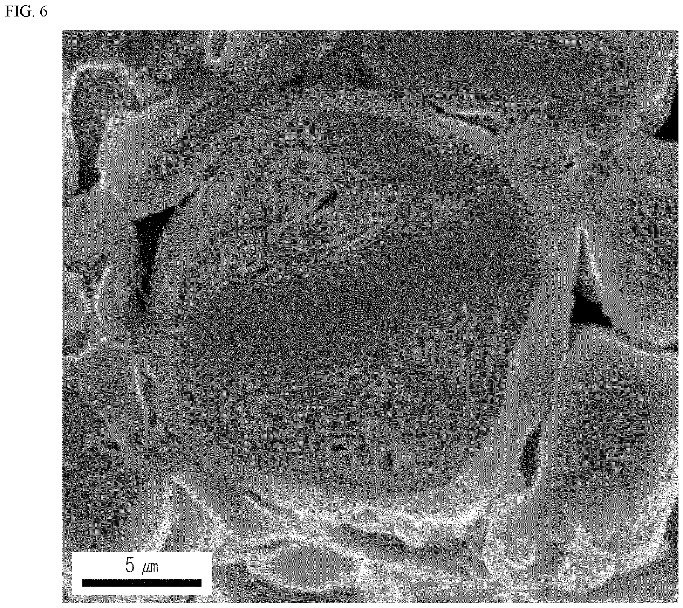

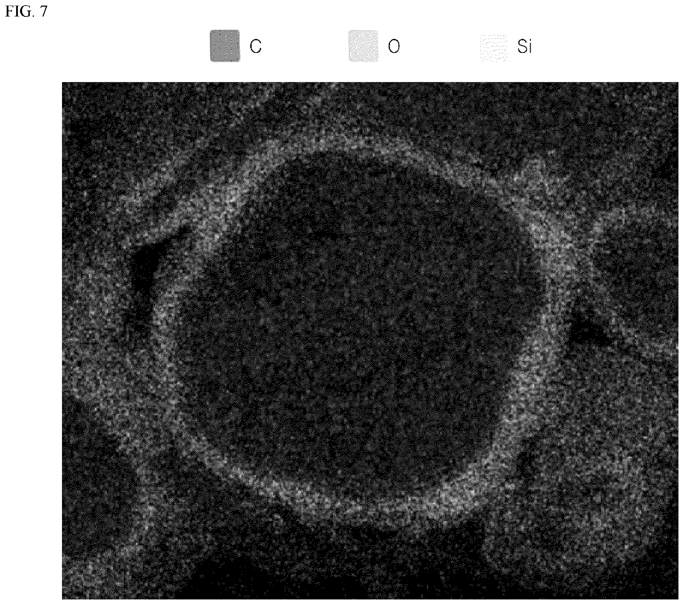

FIG. 4 to FIG. 7 are cross-sectional photographs of the graphite/-nano-silicon/-pitch composite structure as an anode active material as prepared in Present Example 2 of the present disclosure. Specifically, FIGS. 4 and 5 are a cross-sectional SEM image and an EDS mapping image with a scale bar of 20 *µ*m, respectively, and FIGS. 6 and 7 are a cross-sectional SEM image and an EDS mapping image with a scale bar of 5 *µ*m, respectively.

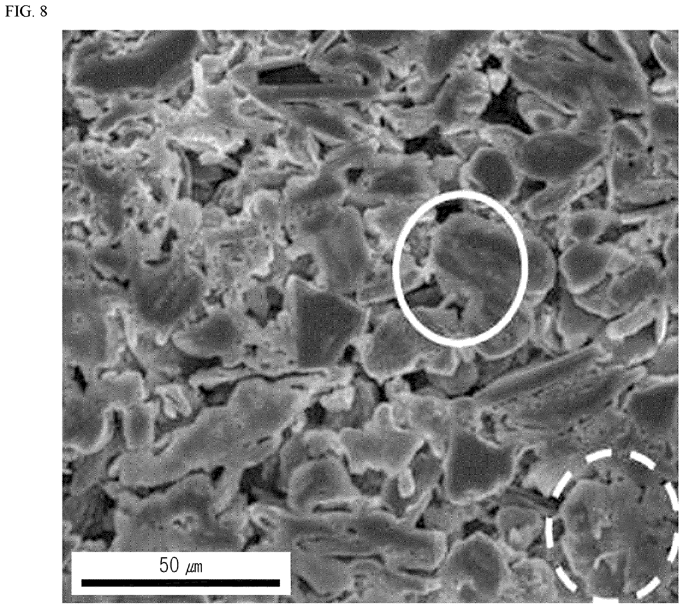

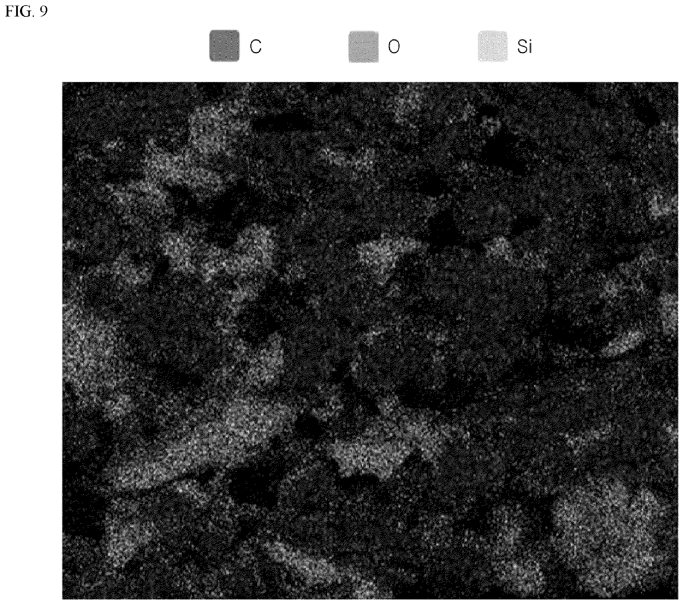

FIGS. 8 and 9 are cross-sectional photographs of a graphite/-nano-silicon/-pitch composite structure as an anode active material as prepared in Comparative Example 1 of the present disclosure. Specifically, FIGS. 8 and 9 are a cross-sectional SEM image and EDS mapping image with a scale bar of 50 *µ*m, respectively.

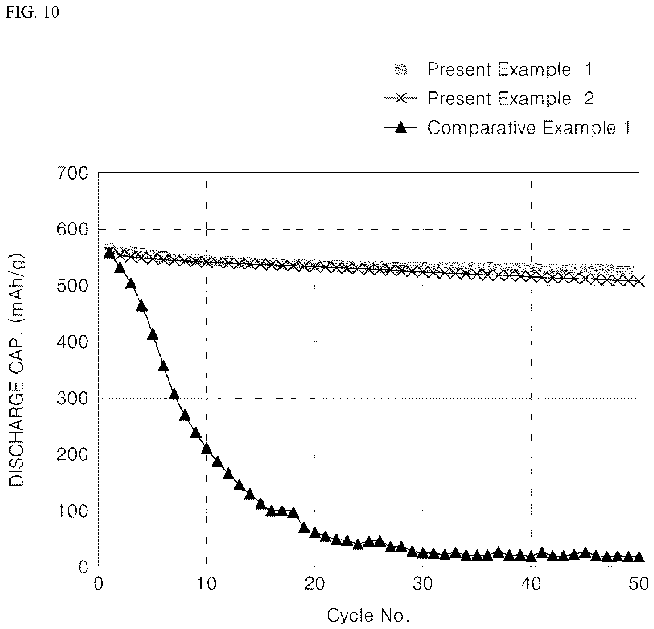

FIG. 10 shows a graph plotting charging and discharging results of 50 cycles among the battery cycle life evaluation results of a half-cell prepared with the anode active material of each of Present Example 1, 2 and Comparative Example 1 of the present disclosure. A horizontal axis indicates the number of cycles, and a vertical axis indicates discharge capacity (unit: mAh/g).

The dotted or solid circle used to refer to a specific object in the black-and-white photo of the drawing of the present disclosure only illustratively refers to a portion of the specific object, and the present disclosure should not be interpreted as limited to the portion indicated as the dotted or solid circle.

### DETAILED DESCRIPTIONS

The above-described purposes, features and advantages are described in detail below with reference to the drawings and embodiments, so that those skilled in the art in the technical field to which the present disclosure pertains may easily implement the technical ideas of the present disclosure. When describing the present disclosure, when it is determined that a detailed description of the known element or step related to the present disclosure may unnecessarily obscure the gist of the present disclosure, the detailed description thereof is omitted. The terms described below are terms written in consideration of their functions and actions in accordance with the present disclosure, and the meaning of each term should be interpreted based on the overall content of the present disclosure.

When describing the present disclosure, when it is determined that a detailed description of the known element or step related to the present disclosure may unnecessarily obscure the gist of the present disclosure, the detailed description thereof is omitted.

As used herein, the term 'pitch coating layer' may be interpreted to refer to both a coating layer of a material consisting only of the pitch and a coating layer of a material including the pitch and another component (e.g., nano-silicon), unless explicitly stated otherwise.

As used herein, the singular constitutes "a" and "an" are intended to include the plural constitutes as well, unless the context clearly indicates otherwise. It will be further understood that the terms "comprise", "comprising", "include", and "including" when used in this specification, specify the presence of the stated features, integers, operations, elements, and/or components, but do not preclude the presence or addition of one or more other features, integers, operations, elements, components, and/or portions thereof.

In interpreting a numerical value, the value is interpreted as including an error range unless there is no separate explicit description thereof.

Hereinafter, the present disclosure describes in detail the method for preparing anode active material for the secondary battery.

The anode active material prepared according to the method for preparing anode active material for the secondary battery in accordance with the present disclosure may have:
i) "a nano-silicon/amorphous carbon/pitch composite structure", which has a structure in which a pitch coating layer is formed on a composite of amorphous carbon-silicon; or
ii) "a graphite-nano-silicon-pitch composite structure" having a structure in which a nano-silicon-pitch shell surrounds a graphite core.

Therefore, the composite structure as the anode active material for the secondary battery that is finally prepared in accordance with the present disclosure may have technical commonality in that ① the composite structure has the pitch coating layer and ② two types of solvents are used to increase the density and coating properties of the pitch coating layer.

In the conventional wet method, a uniform coating layer could not be obtained because the pitch was dissolved using only one type of solvent and then was precipitated. Accordingly, as a result of careful research, the inventors of the present disclosure have discovered that the pitch was first dissolved in a solvent (a first solvent) in which the pitch is soluble to produce a solution, and then, to form a pitch coating layer on an amorphous carbon-silicon composite, or to form a silicon-pitch shell on a graphite core, a solvent (a second solvent) in which the pitch is insoluble is added to the solution such that the pitch is precipitated, such that the uniformity and density of the pitch coating layer of the structure i) or structure ii) are significantly improved. In this way, the present disclosure has been completed.

According to a method for preparing an anode active material for a secondary battery in one aspect of the present disclosure, the anode active material for a secondary battery as i) "a nano-silicon-amorphous carbon-pitch composite structure", which has a structure in which a pitch coating layer is formed on a composite of amorphous carbon-silicon may be prepared.

The preparing method may include:
(a) mixing nano-silicon, a carbon-based conductive material, and a resin matrix to prepare mixture powders;
(b) dissolving high softening point pitch in a first solvent to prepare a pitch solution;
(c) adding and stirring the mixture powders to the pitch solution to prepare a dispersion solution including the nano-silicon, the carbon-based conductive material, and the pitch;
(d) adding a second solvent to the dispersion solution to precipitate the pitch on a composite containing the nano-silicon and the carbon-based conductive material to form a pitch coating layer;
(e) removing the first solvent and the second solvent to obtain dry powders; and
(f) carbonizing the dry powders to obtain an anode active material having a structure in which the pitch coating layer is formed on the composite containing the nano-silicon and amorphous carbon.

The nano-silicon in step (a) may be in a form of nano-silicon particles, and may be of any general type used in the art. For example, it is preferable that a (average) diameter thereof is in a range of 20 to 400 nm. However, the present disclosure is not necessarily limited thereto.

The carbon-based conductive material in step (a) may be mixed with the nano-silicon particles and may be included to impart conductivity to the anode active material. It is preferable that the carbon-based conductive material is electrically conductive without causing chemical changes, for example, carbon black.

When the carbon-based conductive material is subjected to the carbonization process in step (f), it changes into a form of amorphous carbon, ultimately producing an amorphous carbon-silicon composite.

The resin matrix in step (a) may be included for the purpose of bonding the carbon-based conductive material and the nano-silicon particles well to each other, and may include an organic or aqueous resin matrix. For example, the resin matrix may include phenol resin, epoxy resin, thermosetting polyimide, polyester, polyurethane, melamine resin, amino resin, dextrin resin, etc. For example, it may include phenol resin.

The resin matrix, along with the carbon-based conductive material, may be removed during the carbonization process in step (f), so that little or no resin matrix remains in the final anode active material.

It is preferable that 40 to 99 parts by weight of the nano-silicon is contained based on 100 parts by weight of the mixture powders in step (a). It is more preferable that 60 to 95 parts by weight thereof is contained based on 100 parts by weight of the mixture powders in step (a). It is most preferable that 70 to 90 parts by weight thereof is contained based on 100 parts by weight of the mixture powders in step (a). However, the present disclosure is not necessarily limited thereto, and the content of the nano-silicon may be appropriately adjusted depending on the properties of the anode active material to be finally prepared.

Further, according to a method for preparing an anode active material for a secondary battery in another aspect of the present disclosure, the anode active material for a secondary battery as ii) "a graphite-nano-silicon-pitch composite structure" having a structure in which a nano-silicon-pitch shell surrounds a graphite core may be prepared.

The preparing method may include:
(a') dissolving high softening point pitch in a first solvent to prepare a pitch solution, and adding graphite to the pitch solution to prepare a graphite-pitch solution;
(b') dispersing nano-silicon in a second solvent to prepare a nano-silicon dispersion solution, wherein (b') is separate from (a');
(c') adding the nano-silicon dispersion solution to the graphite-pitch solution to prepare a mixed solution of the graphite, the pitch, and the nano-silicon;
(d') further adding the second solvent to the mixed solution of the graphite, the pitch, and the nano-silicon such that a mixture of the nano-silicon and the pitch is precipitated on the graphite, thereby forming a coating layer including the nano-silicon and the pitch;
(e') removing the first solvent and the second solvent to obtain dry powders;
(f) dry-pulverizing the dry powders: and
(g') carbonizing the pulverized dry powders to obtain an anode active material for a secondary battery having a structure in which a nano-silicon-pitch shell surrounds a graphite core.

The high softening point pitch is soluble in the first solvent. For example, the first solvent may include one or more types selected from the group consisting of tetrahydrofuran (THF), quinoline, toluene, pyridine, N-methyl pyrrolidone (NMP), xylene, chloroform, dimethyl sulfoxide and n-hexane. It is preferable that the first solvent includes tetrahydrofuran (THF). However, the present disclosure is not necessarily limited thereto.

Furthermore, the high softening point pitch is insoluble in the second solvent. For example, the second solvent may be selected from the group consisting of ethanol, methanol, acetone, and water. It is preferable that the second solvent include ethanol. However, the present disclosure is not necessarily limited thereto.

Furthermore, in the method for preparing the graphite-silicon-pitch composite in accordance with the present disclosure, the high softening point pitch dissolved in the first solvent is precipitated using the second solvent. Thus, it is preferable that the first solvent and the second solvent are miscible with each other.

When steps (a) to (d) or (a') to (d') of the present disclosure are performed, the pitch is deposited on the graphite-silicon composite to form the pitch coating layer, or the mixture of silicon and the pitch is precipitated on the graphite to form a coating layer. Afterwards, step (e) or step (e') is performed in which the first solvent and the second solvent used in steps (a) to (d) or (a') to (d') are removed to obtain the dry powders which in turn may be converted to the final product of graphite-silicon-pitch composite. In step (e) or step (e'), the first solvent and the second solvent may be vaporized and removed.

Step (e) or (e') of the present disclosure may include a first vaporization step performed under conditions of a pressure of 0.5 to 1 bar and a temperature of 25 to 40°C; and a second vaporization step performed under conditions of a pressure of 0.5 to 1 bar and a temperature higher than a boiling point of each of the first solvent and the second solvent. However, operating conditions of the pressure and the temperature are not necessarily limited thereto.

For example, when using THF as the first solvent and using ethanol as the second solvent, the solvents may be removed by evaporating the same at a temperature of about 60°C.

For example, considering a boiling point of a general solvent, a preferred temperature range of the second vaporization step may be in a range of 40 to 70°C. However, the present disclosure is not necessarily limited thereto.

A time for which each of the first vaporization step and the second vaporization step is performed may be appropriately adjusted depending on the amount of anode active material to be prepared.

The first solvent and the second solvent may be vaporized at once at a temperature higher than the boiling point thereof. However, the first solvent and the second solvent are mixed with the nano-silicon and the high softening point pitch. Thus, to remove only the solvents, the first vaporization step may be performed at room temperature or at a temperature slightly higher than room temperature and, then, the second vaporization step may be performed at a temperature higher than the boiling point of each of the solvents, thereby allowing only the solvents to be selectively removed.

In accordance with the present disclosure, the pitch used as a coating material of the anode material for the secondary battery may be a high softening point pitch. For example, the softening point of the pitch in accordance with the present disclosure is preferably 100°C or higher, more preferably, 200°C or higher, or most preferably, in a range of 200 to 300°C. The high softening point pitch contains components with high boiling points, and thus has excellent crystallinity, and thus has high stability. Thus, when the softening point of the pitch in accordance with the present disclosure is applied to the anode material of a secondary battery, it has the advantage of improving the charging and discharging efficiency of the secondary battery, improving charging density, and increasing the cycle life of the battery. Furthermore, in accordance with the present disclosure, the high softening point pitch constitutes the coating layer. For this reason, the high softening point pitch having a low quinoline insoluble (QI) and a high coking value (CV) related to the carbonization yield may be selected. Specific QI and CV values may vary depending on the type of the solvent for preparing the pitch solution. For example, when, as described below, tetrahydrofuran (THF) is used as the first solvent to prepare the pitch solution, the high softening point may have QI of 0.2% or smaller and CV of 58% or greater. However, the present disclosure is not necessarily limited thereto.

In the method for preparing the anode active material as an amorphous carbon-nano-silicon-pitch composite structure having the above-described "i) structure," after step (e), step (f) of performing the carbonization of the dry powders may be included.

The amorphous carbon-nano-silicon composite is a micro-sized spherical particle with pores. Not only is it coated with the pitch as the pitch enters the pores, but also the pitch is further inserted into the pores in an area where the pitch melts during the carbonization process. Thus, there is no need for additional treatment of the surfaces of the particles after the coating. Thus, a direct carbonization process is adopted.

For example, the carbonization may be performed under an inactive gas atmosphere (e.g., nitrogen atmosphere) by raising the temperature to 1000 to 1100°C and then maintaining the 1000 to 1100°C for about 1 hour. At this time, the temperature increase rate may be, for example, in a range of 5 to 10°C/min. When the carbonization temperature increases, an effect of removing hydrogen and oxygen in the organic resin may be greater. However, when it exceeds 1100°C, SiC may be produced. Thus, the carbonizing temperature may be in a range of 1000 to 1100°C.

In the method for preparing the anode active material as the graphite-nano-silicon-pitch composite structure with the above-described "ii) structure," after step (e') of the present disclosure, step (f) of dry-pulverizing the dry powders may be performed to obtain the graphite-silicon-pitch composite having the structure in which the silicon-pitch shell surrounds the graphite core.

In preparing the graphite-nano-silicon-pitch composite structure, once the formation of the coating layer using the two types of solutions is completed, the nano-silicon-pitch composite simply precipitates on the graphite surface. In this state, the precipitated nano-silicon-pitch composite may be easily removed. Thus, an additional step is required to form a complete coating layer, that is, the shell.

Therefore, in order to make the solid core (graphite)-shell (nano-silicon-pitch) structure more dense and hard, the additional step such as the dry-pulverizing is performed. The dry-pulverization scheme in step (f) of the present disclosure may employ various known schemes. Preferably, the dry-pulverization may be performed in a mechano-fusion blender. However, the present disclosure is not necessarily limited thereto.

After step (f) of the present disclosure, the pulverized dry powders may be carbonized to obtain the anode active material with a structure in which the nano-silicon-pitch shell surrounds the graphite core. The carbonization is the same as described above with reference to the structure i).

### Examples

Hereinafter, the present disclosure is described in more detail based on examples and experimental examples. However, the following example and experimental example only illustrate the present disclosure, and the content of the present disclosure is not limited to the following example and experimental example.

### 1. Preparing graphite-silicon-pitch composite

### [Present Example 1]

(1) Carbon black (Imerys Graphite & Carbon, Super-P product) as the carbon-based conductive material, resol-type phenolic resin (Kangnam Hwaseong, KC-4300N) as the resin matrix, and nano-silicon particles (average value of D₅₀ being 111 nm, and average value of D₉₀ being 158 nm) were mixed with each other (weight ratio = 5:5:90 in the order of the above ingredients, and based on after the carbonization) to prepare a mixture solution which in turn was sprayed and dried. Thus, 7 g of amorphous carbon-silicon composite powders (a) were obtained.
(2) 2 g of the high softening point pitch (softening point: 260°C) was dissolved in 300 ml of tetrahydrofuran to prepare a pitch solution ⓑ.
(3) The above (a) was added to the above ⓑ and then dispersed therein using a stirrer to prepare the dispersion solution ⓒ.
(4) 100ml of ethanol was slowly added to the above ⓒ to precipitate the pitch on the surface (ⓓ).
(5) Tetrahydrofuran was first vaporized from the above ⓓ result under the conditions of pressure, temperature, and time (0.7 bar, 35°C, and 20 minutes).
(6) Tetrahydrofuran and ethanol were entirely vaporized under the conditions of pressure, temperature, and time (0.7 bar, 60°C, and 20 minutes) to obtain the dry powders.
(7) The dried powders were carbonized at a temperature of 1000°C under a nitrogen atmosphere for 60 minutes to obtain the nano-silicon-amorphous carbon-pitch composite structure.

### [Present Example 2]

(1') 5 g of the high softening point pitch was dissolved in 300 ml of tetrahydrofuran to prepare a pitch solution (ⓐ').
(2') 26g of graphite was added to the above ⓐ' to prepare a graphite-pitch solution (ⓑ').
(3') A solution was prepared by dispersing 3 g of nano-silicon particles (average value of D₅₀ being 111 nm, and average value of D₉₀ being 158 nm) in 50 ml of ethanol, and then was added to the graphite-pitch solution ⓑ' to prepare a mixed solution ⓒ'.
(4') 100 ml of ethanol was added to the above ⓒ' to precipitate the high softening point pitch (softening point: 260°C) (ⓓ').
(5') Tetrahydrofuran was first vaporized from the ⓓ' result under the conditions of pressure, temperature, and time (0.7 bar, 35°C, and 20 minutes).
(6') Tetrahydrofuran and ethanol were entirely vaporized under the conditions of pressure, temperature, and time (0.7 bar, 60°C, and 20 minutes) to obtain the dry powders ⓔ'.
(7') The dry powders ⓔ' were put into a mechano-fusion blender and pulverized.
(8') The pulverized dry powders were carbonized at a temperature of 1000°C under a nitrogen atmosphere for 60 minutes to obtain the graphite-nano-silicon-pitch composite structure.

### [Comparative Example 1]

(1 ") 5 g of the high softening point pitch (softening point: 260°C) was pulverized using a blender (ⓐ").
(2") 26 g of graphite was added to the mechano-fusion blender which in turn operated for 5 minutes.
(3") 3 g of the ⓐ" result and nano-silicon particles (average value of D₅₀: 111 nm, and average value of D₉₀: 158 nm) into the mechano-fusion blender containing the graphite which in turn operated for 30 minutes to form a nano-silicon-pitch coating layer on the graphite.
(4") The graphite-nano-silicon-pitch powders were collected from the mechano-fusion blender and were carbonized for 60 minutes under a nitrogen atmosphere at a temperature of 1000°C to obtain a graphite-nano-silicon-pitch composite structure.

### 2. Preparing secondary battery

To analyze the electrochemical properties of the anode material for the secondary battery, the composite structure of amorphous carbon-nano-silicon-pitch prepared in Present Example 1, and the composite structure of graphite-nano-silicon-pitch prepared in each of Present Example 2 and Comparative Example 1 were used.

An anode plate was manufactured using mixture powders of 15% of the composite structure prepared in each of Present Examples 1 to 2 and Comparative Example 1, and 85% of artificial graphite as a final active material. The anode plate was manufactured by preparing a slurry as a mixture of the active material, the conductive material (Imerys Graphite & Carbon, Super-P product), and a binder (CMC: SBR=3 :7) at a weight ratio of 94:1:5, and casting the slurry on a 10 micro thick copper foil using a doctor blade method and then vacuum-drying the casted slurry, and rolling the dried slurry to a thickness of 50 microns using a roll press. The manufactured anode plate together with a lithium metal were used to manufacture a coin cell. Then, electrochemical performance of a half cell thereof was measured.

The charging and discharging conditions were as follows: charging CC/CV: 0.01V/0.01C, and discharging CC 1.5V, and the rate was 0.2C.

Using a half-cell device TOSCAT-3100, each of initial charging efficiency (Initial coulombic efficiency (ICE)); discharge amount relative to initial charge amount), initial charging capacity (ICC), and initial discharge capacity (IDC) was measured. The measurement results are shown in Table 1 below. The cycle life at 50 cycles was measured, and the cycle life is graphed in FIG. 10 (horizontal axis: number of cycles, and vertical axis: discharge capacity).

### 3. Experimental Example

### [Experimental Example 1 - Observation of composite structure surface]

SEM analysis was performed on the surfaces of the composite structures in Present Example 1, 2, and Comparative Example 1.

In FIG. 1 which shows the analysis result of Present Example 1, it was observed that the pitch was uniformly and densely coated on the amorphous carbon and nano-silicon composite, thereby forming a spherical composite structure. FIGS. 2 and 3 are enlarged pictures of FIG. 1. The white portion of the surface of the spherical particle as indicted as a dotted circle in FIGS. 2 and 3 is the pitch coating layer. A portion indicated as a solid circle in FIG. 3 is the amorphous carbon-nano-silicon composite. As a result of observing the photographs in FIGS. 2 and 3, it was confirmed that a thin and uniform pitch coating layer was formed on the surface of the amorphous carbon-nano-silicon composite.

In FIG. 4 to FIG. 7 which shows the analysis results of Present Example 2, it was observed that the graphite core was coated with the shell made of pitch-nano-silicon uniformly and densely. In FIG. 4 and FIG. 6, which are black-and-white drawings, the dark colored middle portion is graphite, the relatively light white portion represents the shell made of pitch-nano-silicon. A purple portion in FIGS. 5 and FIG. 7, which are EDS mapping images, is graphite (marked as carbon (C) on the color label), and a yellow portion in FIGS. 5 and FIG. 7 is the pitch-silicon shell (marked as silicon (Si) on the color label).

On the other hand, Comparative Example 1 is a coating layer formed by a dry method. When large pitches are present, the pitch itself may act as a core rather than a coating material. Thus, it was necessary to pulverize the pitch into a very small size. Thus, step (1)" of Comparative Example 1 was performed.

In Comparative Example 1, as a result of pulverizing the pitch to a small size, pitch particles of the diameter of 50 to 100 *µ*m and fine particles of the diameter of 0.1 to 1 *µ*m were mixed with each other. Thus, the pulverized pitch particles agglomerated together, and a pitch agglomeration consisting only of the pitch rather than a nano-silicon-pitch shell was observed (indicated as a dotted circle in FIG. 8; and the yellow portion in FIG. 9, and indicated as silicon (Si) on the color label). A lump of graphite free of any pitch coating thereon was also observed (a portion indicated as a solid circle in FIG. 8 and a red portion in FIG. 9 and indicated as carbon (C) on the color label).

### [Experimental Example 2 - Battery Performance Evaluation]

To analyze the electrochemical properties of the anode material for the secondary battery, the composite structure of amorphous carbon-nano-silicon-pitch prepared in Present Example 1 and the composite structure of graphite-nano-silicon-pitch prepared in each of Present Example 2 and Comparative Example 1 were used.

An anode plate was manufactured using mixture powders of 15% of the composite structure prepared in each of Present Examples 1 to 2 and Comparative Example 1, and 85% of artificial graphite as a final active material. The anode plate was manufactured by preparing a slurry as a mixture of the active material, the conductive material (Imerys Graphite & Carbon, Super-P product), and a binder (CMC: SBR=3 :7) at a weight ratio of 94:1:5, and casting the slurry on a 10 micro thick copper foil using a doctor blade method and then vacuum-drying the casted slurry, and rolling the dried slurry to a thickness of 50 microns using a roll press. The manufactured anode plate together with a lithium metal were used to manufacture a coin cell. Then, electrochemical performance of a half cell thereof was measured.

The charging and discharging conditions were as follows: charging CC/CV: 0.01V/0.01C, and discharging CC 1.5V, and the rate was 0.2C.

Using a half-cell device TOSCAT-3100, each of initial charging efficiency (Initial coulombic efficiency (ICE)); discharge amount relative to initial charge amount), initial charging capacity (ICC), and initial discharge capacity (IDC) was measured. The measurement results are shown in Table 1 below. The cycle life at 50 cycles was measured, and the cycle life is graphed in FIG. 10 (horizontal axis: number of cycles, and vertical axis: discharge capacity).

**[Table 1]**

| Example | ICC (mAh/g) | IDC(mAh/g) | ICE (%) | CRR @50 cycles (%) |
|---|---|---|---|---|
| Present Example 1 | 648 | 567 | 87 | 93 |
| Present Example 2 | 622 | 560 | 90 | 91 |
| Comparative Example 1 | 656 | 558 | 85 | 3 |

| | | | | |
|---|---|---|---|---|
| *CRR: Capacity Retention Ratio | | | | |

As may be seen in Table 1 above, it was confirmed that the performance of the secondary battery of each of Present Examples 1 to 2 according to the present disclosure was significantly superior to that of the secondary battery of Comparative Example 1.

Although the embodiments of the present disclosure have been described in more detail above, the present disclosure is not necessarily limited to the embodiments, and may be modified and implemented in various ways without departing from the technical idea of the present disclosure. Accordingly, the embodiments as disclosed in the present disclosure are not intended to limit but rather describe the technical ideas of the present disclosure, and the scope of the technical ideas of the present disclosure is not limited by these embodiments. Therefore, the embodiments as described above should be understood in all respects as illustrative and not restrictive. The present disclosure and the scope of protection of the present disclosure should be interpreted according to the scope of the claims, and all technical ideas within the equivalent scope to the claims should be interpreted as being included in the scope of rights of the present disclosure and the present disclosure.

## Claims

1. A method for preparing an anode active material for a secondary battery, the method comprising:
(a) mixing nano-silicon, a carbon-based conductive material, and a resin matrix to prepare mixture powders;
(b) dissolving high softening point pitch in a first solvent to prepare a pitch solution;
(c) adding and stirring the mixture powders to the pitch solution to prepare a dispersion solution including the nano-silicon, the carbon-based conductive material, and the pitch;
(d) adding a second solvent to the dispersion solution to precipitate the pitch on a composite containing the nano-silicon and the carbon-based conductive material to form a pitch coating layer;
(e) removing the first solvent and the second solvent to obtain dry powders; and
(f) carbonizing the dry powders to obtain an anode active material having a structure in which the pitch coating layer is formed on the composite containing the nano-silicon and amorphous carbon,
wherein the high softening point pitch is soluble in the first solvent,
wherein the high softening point pitch is insoluble in the second solvent,
wherein the first solvent and the second solvent are miscible with each other.

2. A method for preparing an anode active material for a secondary battery, the method comprising:
(a') dissolving high softening point pitch in a first solvent to prepare a pitch solution, and adding graphite to the pitch solution to prepare a graphite-pitch solution;
(b') dispersing nano-silicon in a second solvent to prepare a nano-silicon dispersion solution, wherein (b') is separate from (a');
(c') adding the nano-silicon dispersion solution to the graphite-pitch solution to prepare a mixed solution of the graphite, the pitch, and the nano-silicon;
(d') further adding the second solvent to the mixed solution of the graphite, the pitch, and the nano-silicon such that a mixture of the nano-silicon and the pitch is precipitated on the graphite, thereby forming a coating layer including the nano-silicon and the pitch;
(e') removing the first solvent and the second solvent to obtain dry powders;
(f) dry-pulverizing the dry powders: and
(g') carbonizing the pulverized dry powders to obtain an anode active material for a secondary battery having a structure in which a nano-silicon-pitch shell surrounds a graphite core,
wherein the high softening point pitch is soluble in the first solvent,
wherein the high softening point pitch is insoluble in the second solvent,
wherein the first solvent and the second solvent are miscible with each other.

3. The method of claim 1, wherein in the (a), the nano-silicon is contained at a content of 40 to 99 parts by weight based on 100 parts by weight of the mixture powders.

4. The method of claim 1, wherein the carbon-based conductive material in the (a) includes carbon black.

5. The method of claim 1, wherein the resin matrix in the (a) includes at least one of phenol resin, epoxy resin, thermosetting polyimide, polyester, polyurethane, melamine resin, amino resin, or dextrin resin.

6. The method of claim 1 or 2, wherein the high softening point pitch has a softening point in a range of 200 to 300 °C.

7. The method of claim 1 or 2, wherein the (e) or the (e') includes:
a first vaporization step performed under conditions of a pressure of 0.5 to 1 bar and a temperature of 25 to 40°C; and
a second vaporization step performed under conditions of a pressure of 0.5 to 1 bar and a temperature higher than a boiling point of each of the first solvent and the second solvent.

8. The method of claim 1 or 2, wherein the first solvent includes at least one selected from a group consisting of tetrahydrofuran (THF), quinoline, toluene, pyridine, N-methyl pyrrolidone (NMP), xylene, chloroform, dimethyl sulfoxide and n-hexane.

9. The method of claim 1 or 2, wherein the second solvent includes at least one selected from a group consisting of ethanol, methanol, acetone, and water.

10. The method of claim 1 or 2, wherein the first solvent includes tetrahydrofuran, and the second solvent includes ethanol.

11. The method of claim 1 or 2, wherein the carbonization is performed at a temperature in a range of 1000 to 1100°C.

12. The method of claim 2, wherein the (f) is performed in a mechano-fusion blender.

13. An anode material for a secondary battery, the anode material including the anode active material for the secondary battery prepared according to the preparing method of claim 1 or 2.

14. A secondary battery comprising the anode active material for the secondary battery prepared according to the preparing method of claim 1 or 2.
